# EUROPÄISCHE PATENTSCHRIFT

(11) **EP 0 813 990 B1**
(45) Veröffentlichungstag und Bekanntmachung des Hinweises auf die Patenterteilung: **12.04.2006**
(21) Anmeldenummer: 97250191.0
(22) Anmeldetag: 23.06.1997
(51) Int. Cl.: B60N 2/02

(54) **Vorrichtung zur translatorischen Verstellung eines Sitzteils, insbesondere zur Sitzkissenlängsverstellung von Kraftfahrzeugsitzen**
Device for translatory adjusting a part of a seat, in particular for longitudinally adjusting the seat cushion of automotive vehicle seats
Dispositif de réglage en translation d'une partie d'un siège, en particulier de réglage longitudinal de l'assise de sièges de véhicules automobiles

(30) Priorität: 22.06.1996 DE 19624979
(43) Veröffentlichungstag der Anmeldung: 29.12.1997
(73) Patentinhaber: Brose Fahrzeugteile GmbH & Co. KG, 96450 Coburg (DE)
(72) Erfinder: Schrimpl, Bernhard, 96450 Coburg (DE); Leipold, Herbert, 96529 Mengersgereuth-Hämmern (DE)
(74) Vertreter: Ninnemann, Detlef

(56) Entgegenhaltungen:
- DE-A- 1 630 926
- DE-A- 3 033 953
- DE-A- 3 841 711
- DE-A- 4 224 458
- US-A- 3 572 829
- PATENT ABSTRACTS OF JAPAN vol. 011, no. 102 (M-576), 31. März 1987 (1987-03-31) & JP 61 249844 A (IKEDA BUSSAN CO LTD), 7. November 1986 (1986-11-07)

## Beschreibung

Die Erfindung betrifft eine Vorrichtung zur translatorischen Verstellung eines Sitzteils, insbesondere zur Sitzkissenlängsverstellung von Kraftfahrzeugsitzen gemäß dem Oberbegriff des Patentanspruchs 1.

Im allgemeinen werden translatorische Verstellbewegungen von Sitzen oder Sitzteilen unter Verwendung von Schienenführungen oder Kulissenführungen realisiert (JP-A 61-249844, DE 42 24 458 A1, DE 38 41 711 A1). Darüber hinaus ist es bekannt, die ineinandergreifenden Teile der Führungsvorrichtung miteinander federelastisch zu verspannen (DE 40 05 224 A1), um spielbedingte Geräusche zu vermeiden, und/oder die Gleiteigenschaften verbessernde Gleitelemente (zumeist aus Kunststoff) zwischen den zueinander beweglichen und miteinander im Eingriff stehenden Teilen einzusetzen.

Aufgrund des Trends im Automobilbau, bei gleichbleibendem oder reduziertem Platzangebot den Komfort immer weiter zu steigern, könnnen nur äußerst platzsparende Konstruktionen zum Einsatz kommen, wie beispielsweise in ein Seitenblech integrierte Kulissenführungen entsprechend der DE 42 24 458 A1. Die fortschreitende Gewichtsreduzierung durch den Einsatz dünnerer Bleche und größerer Blechausschnitte hat bei Sitzwannen zum Beispiel zu einem erheblichen Verlust an Steifigkeit geführt. Die nun vergleichsweise hohe Flexibilität der Teile verschlechert die Führungseigenschaften der zueinander beweglichen Führungselemente oft in unzulässiger Weise, da das Verkanten der Führungselemente zu Schwergängigkeit, erhöhtem Verschleiß, Geräuschbildung und im Extremfall zum Versagen der Verstellvorrichtung führen kann. Ähnliche Auswirkungen können auftreten, wenn Bauteile mit großen zulässigen Toleranzbereichen verbaut werden sollen, um Kosten zu sparen.

Der Erfindung liegt deshalb die Aufgabe zugrunde, eine Vorrichtung zur translatorischen Verstellung eines Sitzteils, insbesondere zur Sitzkissenlängsverstellung von Kraftfahrzeugsitzen zu entwickeln, die sich durch einen einfachen, platzsparenden und kostengünstigen Aufbau auszeichnet und die auch bei vergleichsweise großen Fertigungs- und Montagetoleranzen sowie Relativbewegungen im Führungsbereich der Verstellvorrichtung eine hohe Funktionssicherheit gewährleistet. Insbesondere sollen Fluchtungsfehler und infolge der Belastung der Vorrichtung auftretende Fluchtungswinkel von in Kulissen geführten achsenartigen Stützelementen sicher ausgeglichen werden.

Erfindungsgemäß wird die Aufgabe durch die Merkmale des Patentanspruchs 1 gelöst.

Demnach ist die Durchtrittsöffnung des in der Führungskulisse des ersten Teils, z.B. des Sitzseitenteils, gelagerten Gleiters konisch ausgebildet, wobei sich die lichte Weite der Durchgriffsöffnung in Richtung der Verbindungsstelle zwischen dem Stützelement und dem zweiten, dazu verschiebbaren Teil, z.B. der Sitzwanne, vergrößert. Darüber hinaus lagert das Stützelement in der Durchgriffsöffnung axial verschiebbar und winkelbeweglich innerhalb des Öffnungswinkels der Durchgriffsöffnung.

Die erfindungsgemäße Ausbildung der translatorischen Verstellvorrichtung erlaubt den problemlosen Einsatz von Bauteilen mit einer vergleichsweise geringen Steifigkeit, beziehungsweise einer großen Toleranzbreite, ohne daß Schwergängigkeiten oder ein Verklemmen der Vorrichtung befürchtet werden müssen. Da die erfindungsgemäßen Maßnahmen in Bauteile integriert werden können, die bei Verstellvorrichtungen des beschriebenen Typs im allgemeinen ohnehin vorhanden sind, entsteht zur Erzielung der genannten Vorteile kein Mehraufwand.

Um eine optimale Wirksamkeit der Vorrichtung zur gewährleisten, sollte der Öffnungswinkel der konischen Durchgriffsöffnung des Gleiters an die maximal zu erwartende Fluchtungsabweichung (Winkelabweichung) zwischen der Führungskulisse des ersten Teils (Sitzseitenteil) und dem am zweiten Teil (Sitzwanne) befestigten Stützelement angepaßt werden.

Für den Fall, daß bei einer außergewöhnlich hohen Belastung, zum Beispiel infolge eines Crashs, eine Gefahr dafür besteht, daß die Elemente des translatorischen Führungsbereichs außer Eingriff geraten, sollten zusätzlich Mittel zum Einsatz kommen, die eine hinreichende Ausreißfestigkeit sicherstellen. Zu diesem Zweck kann beispielsweise das freie Ende des Stützelements, das die Durchgriffsöffnung des Gleiters durchragt, mit einem Sicherungskopf versehen sein. Dieser Sicherungskopf tritt bei entsprechend hoher Zugbelastung mit dem Rand der Führungskulisse direkt oder über ein vorgelagertes Anschlagselement indirekt in Eingriff.

Die Ausreißfestigkeit kann noch erhöht werden, wenn die Führungskulisse und das Anschlagselement Verhakungselemente tragen, die miteinander formschlüssig in Eingriff treten können.

Sofern also ein Anschlagselement mit einer nennenswerten Dicke zur Anwendung kommt, muß auch dessen Durchgriffsöffnung konisch ausgebildet sein, damit eine hinreichende Schwenkbarkeit des Stützelements erhalten bleibt. Natürlich öffnet sich der Konus der Durchgriffsöffnung des Anschlagselements in entgegengesetzter Richtung wie der Konus der Durchgriffsöffnung des Gleiters. Die im Montagezustand aneinanderliegenden Enden der Durchgriffsöffnungen mit dem jeweils kleinen Durchmesser bilden quasi das Gelenk für das axial verschiebbare und winkelbewegliche Stützelement.

Nach einer Vorzugsvariante der Erfindung ist zwischen dem zweiten Teil (zum Beispiel einer Sitzwanne) und dem ersten Teil (zum Beispiel einem Sitzseitenteil) beziehungsweise dem Gleiter eine Druckfeder vorgesehen, die einerseits die Sitzwanne zwischen den beiden Sitzseitenteilen zentriert und andererseits zur Erhöhung der Führungsgenauigkeit den Gleiter gegen das erste Teil drückt. Diese Feder ist vorzugsweise einstückig in einen Kunststoffgleiter integriert.

Gemäß einer weiteren Vorzugsvariante ist in das Anschlagselement, das der Erhöhung der Ausreißfestigkeit dient, auch ein Kraftübertragungselement zum Einleiten der Verstellkraft der translatorischen Verstelleinrichtung einstückig integriert. Ein solches Anschlagselement kann beispielsweise durch Gießen oder Sintern hergestellt werden. Als Kraftübertragungselement für die Verstellkräfte können unter anderem ein Lagerzapfen, eine Lagerbuchse oder eine Spindelmutter, in die eine Verstellspindel eingreift, dienen. Die Verstellspindel kann durch einen manuellen Mechanismus oder durch eine fremdkraftbetätigte, motorische Antriebseinheit angetrieben werden.

Nachfolgend wird die Erfindung anhand eines Ausführungsbeispiels und der dargestellten Figuren näher erläutert. Es zeigen:
- Figur 1: eine perspektivische Explosivdarstellung eines Ausschnittes eines Sitzseitenteils mit Kulissenführungen für eine Sitzkissenlängsverstellung sowie mit einem verschiebbaren Gleiter, einem An- schlagselement und einem zweiteiligen, mit einer (nicht dargestellten) Sitzwanne verbundenen Stützelement;
- Figur 1a: eine vergrößerte perspektivische Darstellung des Gleiters;
- Figur 1b: eine vergrößerte perspektivische Darstellung des Anschlagselements mit integrierter Spindelmutter und
- Figur 2: eine vertikale Schnittdarstellung des Gleitführungsbereichs durch die Achse des Stützelements.

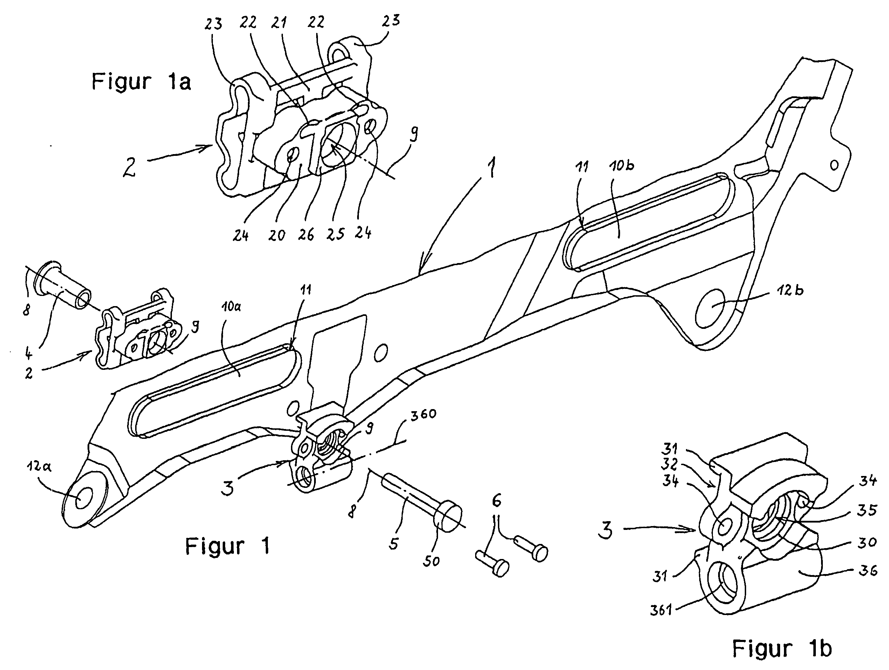

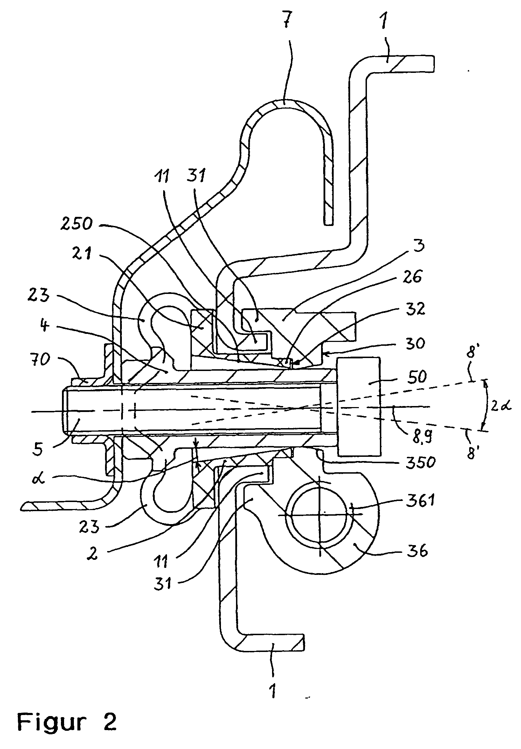

Das in Figur 1 und 2 dargestellte Ausführungsbeispiel betrifft eine Sitzkissenlängsverstellung für einen Kraftfahrzeugsitz und zeigt eine optimierte Gestaltung der translatorischen Verstelleinrichtung, die über die erfindungswesentlichen Merkmale des Patentanspruchs 1 weit hinausgeht. Natürlich kann das Prinzip dieser Verstellvorrichtung auch für andere Verstellteile, zum Beispiel für eine Lehnenhöhenverstellung oder eine Sitzlängsverstellung, gegebenenfalls unter Anpassung an die konkreten Erfordernisse der betreffenden Verstellteile, zum Einsatz kommen.

Das Sitzseitenteil 1 des Sitzes ist aus Blech als Stanzprägeteil ausgeführt und besitzt eine hohe Steifigkeit, um die daran gelagerten Teile (Sitzwanne 7, Rückenlehne) sicher führen beziehungsweise halten zu können. Über die Anschläge 12a, 12b steht das Sitzseitenteil 1 mit einer Vorrichtung zur Sitzlängsverstellung in Verbindung; es können aber auch Hebel einer Sitzhöhenverstellung zwischengeschaltet sein.

Im Sitzseitenteil 1 sind zwei miteinander fluchtende Führungskulissen 10a, 10b durch Stanzen eingearbeitet, deren Kontur von einer Randumstellung 11 gebildet ist. Seitens der Sitzwanne 7 (siehe auch Figur 2) ist den Führungskulissen 10a, 10b (dargestellt nur für die Führungskulisse 10a) ein Gleiter 2 vorzugsweise in Form eines Kunststoffspritzteils zugeordnet.

Eine vergrößerte Darstellung zeigt Figur 2. Von der anderen Seite des Sitzseitenteils 1 her wird ein Anschlagselement 3 auf den Gleiter 2 aufgesetzt und mit diesem durch die Schrauben 6 fest verbunden. Eine vergrößerte Ansicht des Anschlagselements 3 zeigt Figur 1b. Es sind aber auch andere Verbindungsmethoden von Gleiter 2 und Anschlagselement 3, wie bspw. Clipsen oder Kleben, denkbar.

Der Gleiter 2 weist einen Basiskörper 20 auf, der im Montagezustand im Spalt der Führungskulisse 10a lagert, wobei die von der Randumstellung 11 gebildeten Flächen der Führung dienen. An der Oberseite des Basiskörpers 20 sind einstückig Federbereiche 22 angespritzt, die für einen spielfreien Sitz des Gleiters 2 sorgen.

Quer zur Verschiebeebene des Gleiters 2 erstreckt sich am Basiskörper 20 eine Grundplatte 21, die zum einen als Anschlag bzw. Führungsfläche für die Innenseite des Sitzseitenteils 1 und zum anderen als Träger für die angeformten Federelemente 23 dient. Die Federelemente 23 stützen sich an der Sitzwanne 7 ab und geben ihr so den nötigen Halt zwischen den beiden Sitzseitenteilen 1 eines jeden Sitzes. Für eine hohe Führungsgenauigkeit ist es auch wichtig, daß der Gleiter 2 durch die Federelemente 23 gegen das Sitzseitenteil 1 gedrückt wird. Entlang der Achse 9 des Gleiters 2 erstreckt sich eine konische Durchgriffsöffnung 25 mit einem Öffnungswinkel 2α, der der maximal zu erwartenden Winkelabweichung zwischen der Achse 8 des Stützelements 4, 5 und der Achse 9 des Gleiters 2 entspricht. Den geringsten Durchmesser besitzt der Konus 25 an der dem Anschlagselement 3 zugewandten Seite im Bereich des prismenartigen Vorsprungs 26 und er öffnet sich in Richtung der Sitzwanne 7. In Figur 2 bezeichnen die Grenzlagen der 8' der Achse 8 den maximalen Schwenkbereich 2a des Stützelements 4, 5 in der konischen Durchgriffsöffnung 25 des Gleiters 2.

Das Anschlagselement 3 muß im Crashfall sehr große Kräfte aufnehmen und besteht deshalb vorzugsweise aus Metall. Es kann beispielsweise durch Sintern, Spritzen oder Gießen hergestellt sein. Auf der der Führungskulisse 10a zugewandten Seite besitzt es eine prismenartige Ausnehmung 32, in die der prismenartige Vorsprung 26 des Gleiters 2 eingreift und so eine verdrehsichere Verbindung gewährleistet. Dadurch soll verhindert werden, daß die Verhakungselemente 31 des Anschlagselements 3 auf der Randumstellung 11 der Führungskulisse 10a, 10b im Normalbetrieb reiben. Die von den Verhakungselementen 31 umgriffene Randumstellung 11 fungiert also nicht nur als Führungsfläche für den Gleiter 2, sie ist selbst auch Verhakungselement.

An die sich nach außen hin erweiterende konische Durchgriffsöffnung 35 des Anschlagselements 3 grenzt eine Anschlagsfläche 30 an, die dem Sicherungskopf 50 der Schraube 5 zugeordnet ist und mit diesem in Eingriff tritt, wenn zwischen der Sitzwanne 7 und dem Sitzseitenteil 1 eine hohe axiale Zugbelastung entsteht. Im Normalbetrieb jedoch wird die Lage des Stützelements 4, 5 in den konischen Durchgriffsöffnungen 25, 35 des Gleiters 2 beziehungsweise des Anschlagelements 3 etwa mit der Schnittdarstellung von Figur 2 übereinstimmen. Das heißt, die Sitzwanne 7 nimmt eine gewisse mittlere Position ein, bei der weder der Sicherungskopf 50 mit der Anschlagfläche 30 in Eingriff tritt, noch die Feder 23 vollständig komprimiert ist.

Gemäß dem vorliegenden Ausführungsbeispiel ist die Schraube 5 als selbstschneidende Schraube ausgeführt, deren Gewinde sich in einen Blechdurchzug der Sitzwanne 7 eingräbt. Gemeinsam bilden die Schraube 5 und die darauf aufgesteckte Distanzhülse 4 das Stützelement 4, 5, wobei die Distanzhülse 4 eine definierte Lage des Stützelements 4, 5 und des Sicherungskopfes 50 gewährleistet. Der Außendurchmesser der Distanzhülse 4 ist nur geringfügig kleiner als der kleinste Durchmesser der konischen Durchtrittsöffnungen 25, 35.

Obwohl für eine stabile Führung der Sitzwanne 7 im Sitzseitenteil 1 zwei Führungskulissen 10a, 10b mit entsprechenden Gleitern 2 und Stützelementen 4, 5 erforderlich sind, muß lediglich ein Anschlagselement 3 mit einer Spindelmutter 36 oder einem anderen, eine Verstellkraft aufnehmenden Element ausgestattet sein. Der Gleiter 2 der anderen Führungskulisse 10b wird bei einer Verstellung "lose" über die Sitzwanne 7 mitgeführt. Des weiteren ist aber auch denkbar, die Verstellkraft in den Gleiter 2 oder das Stützelement 4, 5 einzuleiten. Welche der Varianten zu bevorzugen ist, wird im allgemeinen von den Platzverhältnissen des konkreten Sitzes abhängen.

Da der Antrieb der translatorischen Verstellvorrichtung in keiner direkten Beziehung zum Erfindungsprinzip steht, wurde dieser in den Figuren nicht dargestellt. Es sei jedoch ausdrücklich darauf hingewiesen, daß neben einer in der Achse 360 lagernden und in das Gewinde 361 der Spindelmutter 36 eingreifenden (nicht dargestellten) Spindel auch anderen Antriebsmechanismen zum Einsatz kommen können.

### Bezugszeichenliste

- 1: erstes Teil / Sitzseitenteil (Ausschnitt)
- 10a: Führungskulisse, vorne
- 10b: Führungskulisse, hinten
- 11: Randumstellung/Verhakungselement
- 12a: Anschlag, z.B. für einen Hebel
- 12b: Anschlag, z.B. für einen Hebel

- 2: Gleiter
- 20: Basiskörper
- 21: Grundplatte
- 22: Federelement
- 23: Federelement
- 24: Befestigungsloch
- 25: Konische Durchgriffsöffnung
- 26: Prismenartiger Vorsprung
- 250: Wandung / konische Fläche

- 3: Anschlagselement
- 30: Anschlagsfläche
- 31: Verhakungselement
- 32: Stufe / prismenartige Ausnehmung
- 34: Befestigungsloch
- 35: Konische Durchgriffsöffnung
- 36: Spindelmutter / Kraftübertragungselement
- 350: Wandung / konische Fläche
- 360: Achse der Spindelmutter
- 361: Spindelmuttergewinde

- 4: Distanzhülse
- 5: Schraube
- 50: Schraubenkopf / Sicherungskopf

- 6: Schraube

- 7: zweites Teil / Sitzwanne
- 70: Mutter / Blechdurchzug

- 8: Achse von Distanzhülse 4 und Schraube 5
- 8': obere bzw. untere Grenzlage der Achse 8

- 9: Achse der konischen Durchgriffsöffnung 25 des Gleiters und des Anschlagselements 3

- α: halber Öffnungswinkel der konischen Öffnung

## Patentansprüche

1. Vorrichtung zur translatorischen Verstellung eines Sitzteils, insbesondere zur Sitzkissenlängsverstellung von Kraftfahrzeugsitzen, mit einer Führungskulisse (10a, 10b) in einem ersten Teil, z.B. einem Sitzseitenteil (1), und einem in der Führungskulisse (10a, 10b) geführten Stützelement (4, 5), das mit einem zweiten, dazu verschiebbaren Teil, z.B. einer Sitzwanne (7), fest in Verbindung steht, wobei zwischen dem Rand der Führungskulisse (10a, 10b) und dem Stützelement (4, 5) ein Gleiter (2) lagert,
**dadurch gekennzeichnet,**
**dass** die Durchgriffsöffnung (25) des Gleiters (2) konisch mit einem Öffnungswinkel (2α) mit einer sich in Richtung des zweiten Teils (7) vergrößernden lichten Weite ausgebildet ist und dass das Stützelement (4, 5) axial verschiebbar und innerhalb des Öffnungswinkels (2α) winkelbeweglich in der Durchgriffsöffnung (25) des Gleiters (2) lagert.

2. Vorrichtung nach Anspruch 1, **dadurch gekennzeichnet, daß** das Stützelement (4, 5) aus einer Distanzhülse (4) und einer Schraube (5) mit einem Schraubenkopf (50) besteht, die die Distanzbuchse (4) gegen das zweite Teil (7) im Bereich der Mutter (70) verspannt.

3. Vorrichtung nach Anspruch 2, **dadurch gekennzeichnet, daß** der Schraubenkopf (50) der Schraube (5) mit dem Rand der Führungskulisse (10a, 10b) oder einem zwischen dem Rand der Führungskulisse (10a, 10b) und dem Schraubenkopf (50) lagernden Anschlagselement (3) in Eingriff treten kann.

4. Vorrichtung nach mindestens einem der voranstehenden Ansprüche, **dadurch gekennzeichnet, daß** am Rand der Führungskulisse (10a, 10b) Verhakungselemente in Form von Randumstellungen (11) vorgesehen sind, die mit Verhakungselementen (31) des Anschlagselements (3) verschiebbar in Eingriff stehen.

5. Vorrichtung nach Anspruch 3, **dadurch gekennzeichnet, daß** die Durchgriffsöffnung (35) des Anschlagelements (3) eine Stufe (32) aufweist, die das eine Ende (prismenartiger Vorsprung 26) des Gleiters (2) verdrehsicher abstützt und einen Innendurchmesser besitzt, der mit der lichten Weite (orthogonal zur Verschieberichtung) des Gleiters (2) an dieser Stelle annähernd übereinstimmt, und daß sich der Innendurchmesser der Durchgriffsöffnung (35) in Richtung des Schraubenkopfes (50) konisch erweitert.

6. Vorrichtung nach mindestens einem der voranstehenden Ansprüche, **dadurch gekennzeichnet, daß** die Öffnungswinkel (2α) der konischen Flächen (250, 350) des Gleiters (2) und des Anschlagelements (3) dem maximal zu erwartenden Verkantungswinkel des Stützelements (4, 5) entspricht.

7. Vorrichtung nach mindestens einem der voranstehenden Ansprüche, **dadurch gekennzeichnet, daß** der Gleiter (2) aus einem Basiskörper (20) und einer dazu rechtwinklig verlaufenden Grundplatte (21) besteht, wobei der Basiskörper (20) die konisch ausgebildete Durchgriffsöffnung (25) sowie wenigstens ein gegen die Kontur der Führungskulisse (10a, 10b) gerichtetes Federelement (22) aufweist und wobei zwischen der Grundplatte (21) und dem zweiten Teil (7) wenigstens ein in Achsrichtung des Stützelements (4, 5) wirkendes Federelement (23) angeordnet ist.

8. Vorrichtung nach Anspruch 6 oder 7, **dadurch gekennzeichnet, daß** der Gleiter (2) als einstückiges Kunststoffteil ausgebildet ist.

9. Vorrichtung nach mindestens einem der voranstehenden Ansprüche, **dadurch gekennzeichnet, daß** am Anschlagselement (3) einstückig eine Spindelmutter 36 angeformt ist, die mit einer Verstellspindel im Eingriff steht, welche von einer Antriebseinheit angetrieben wird.

## Revendications

1. Dispositif de réglage en translation d'une partie de siège, notamment pour le réglage longitudinal de coussins de sièges de véhicule automobile, comportant une glissière de guidage (10a, 10b) située dans une première partie, par exemple une partie (1) du siège et un élément d'appui (4, 5), qui est guidé dans la glissière de siège (10a, 10b) et est relié fermement à une seconde partie déplaçable par rapport à la précédente, par exemple un baquet de siège (7), un coulisseau (2) étant monté entre le bord de la glissière de guidage (10a, 10b) et l'élément d'appui (4, 5),
**caractérisé en ce**
**que** l'ouverture d'engagement (25) du coulisseau (2) est réalisée sous forme conique avec un angle d'ouverture (2α) avec une largeur de passage libre qui augmente en direction de la seconde partie (7), et en ce que l'élément d'appui (4, 5) est monté de manière à être déplaçable axialement et avec une possibilité de déplacement angulaire à l'intérieur de l'angle d'ouverture (2α) dans l'ouverture (25) du coulisseau (2).

2. Dispositif selon la revendication 1, **caractérisé en ce que** l'élément d'appui (4, 5) est constitué par une douille - entretoise (4) et par une vis (5) possédant une tête de vis (50) qui serre la douille - entretoise (4) contre la seconde partie (7) au niveau de l'écrou (70).

3. Dispositif selon la revendication 2, **caractérisé en ce que** la tête (50) de la vis (5) peut venir en prise avec le bord de la glissière de guidage (10a, 10b) ou avec un élément de butée (3) qui est monté entre le bord de la glissière de guidage (10a, 10b) et la tête de vis (50).

4. Dispositif selon au moins l'une des revendications précédentes, **caractérisé en ce que** sur le bord de la glissière de guidage (10a, 10b) sont prévus des éléments d'accrochage se présentant sous la forme de rabats de bord (11), qui sont en prise avec possibilité de déplacement avec des éléments d'accrochage (31) de l'élément de butée (3).

5. Dispositif selon la revendication 3, **caractérisé en ce que** l'ouverture d'engagement (35) de l'élément de butée (3) possède une partie étagée (32) qui supporte, d'une manière bloquée en rotation, une extrémité (partie saillante de forme prismatique 26) du coulisseau (2) et possède un diamètre intérieur qui coïncide approximativement avec la largeur de passage libre (perpendiculaire à la direction de déplacement) du coulisseau (2) en cet emplacement et **en ce que** le diamètre intérieur de l'ouverture d'engagement (35) s'élargit avec une forme conique en direction de la tête de vis (50).

6. Dispositif selon au moins l'une des revendications précédentes, **caractérisé en ce que** l'angle d'ouverture (2α) des surfaces coniques (250, 350) du coulisseau (2) et de l'élément de butée (3) correspond à l'angle d'obliquité, auquel on peut s'attendre au maximum, de l'élément d'appui (4, 5).

7. Dispositif selon au moins l'une des revendications précédentes, **caractérisé en ce que** le coulisseau (2) est constitué par un corps de base (20) et par une plaque de base (21) qui s'étend perpendiculairement à ce corps, dans lequel le corps de base (20) comporte l'ouverture d'engagement (25) agencée avec une forme conique ainsi qu'au moins un élément de ressort (22) dirigé vers le contour de la glissière de guidage (10a, 10b), et dans lequel au moins un élément de ressort (23), qui agit dans la direction axiale de l'élément d'appui (4, 5), est disposé entre la plaque de base (21) et la seconde plaque (7).

8. Dispositif selon la revendication 6 ou 7, **caractérisé en ce que** le coulisseau (2) est agencé sous la forme d'une pièce en matière plastique monobloc.

9. Dispositif selon au moins l'une des revendications précédentes, **caractérisé en ce que** sur l'élément de butée (3) est formé d'un seul tenant un écrou de broche (36), qui engrène avec une broche de réglage qui est entraînée par une unité d'entraînement.

## Claims

1. Device for the translational adjustment of a seat part, more particularly for longitudinally adjusting the seat cushion of motor vehicle seats, with a guiding slide (10a, 10b) in the first part, e.g. a seat side part (1), and a support element (4,5) guided in the guiding slide (10a, 10b) and in fixed connection with a second part displaceable relative thereto, e.g. a seat pan (7), whereby a slider (2) is mounted between the edge of the guiding slide (10a, 10b) and the support element (4,5),
**characterised in that**
the through opening (25) in the slider (2) has a conical design with an opening angle (2α) with an internal width which widens out towards the second part, and that the support element (4, 5) is mounted axially displaceable in the through opening (25) of the slider (2) where it can be moved within the opening angle (2α).

2. Device according to claim 1, **characterised in that** the support element (4, 5) consists of a spacer sleeve (4) and a screw (5) with screw head (50) which tensions the spacer sleeve (4) against the second part (7) in the region of the nut (70).

3. Device according to claim 2, **characterised in that** the screw head (50) of the screw (5) can move into engagement with the edge of the guiding slide (10a, 10b) or a stop element (3) mounted between the edge of the guiding slide (10a, 10b) and the screw head (50).

4. Device according to at least one of the preceding claims, **characterised in that** on the edge of the guiding slide (10a, 10b) there are hooked elements in the form of flanged edge parts (11) which are displaceably engaged with hooked elements (31) of the stop element (3).

5. Device according to claim 3, **characterised in that** the through opening (35) of the stop element (3) has a step (32) which supports the one end (prism-shaped projection 26) of the slider (2) secured against rotation and which has an internal diameter which substantially agrees with the internal width (orthogonal to the displacement direction) of the slider (2) at this point, and that the internal diameter of the through opening (35) widens conically out towards the screw head (50).

6. Device according to at least one of the preceding claims, **characterised in that** the opening angle (2α) of the conical faces (250, 350) of the slider (2) and stop element (3) corresponds to the maximum canting angle of the support element (4, 5) which may be expected.

7. Device according to at least one of the preceding claims, **characterised in that** the slider (2) consists of a base body (20) and a base plate (21) running at right angles thereto whereby the base body (20) has the conically designed through opening (25) as well as at least a spring element (22) which is directed opposite the contour of the guiding slide (10a, 10b), and whereby at least one spring element (23) acting in the axial direction of the support element (4, 5) is mounted between the base plate (21) and the second part (7).

8. Device according to claim 6 or 7, **characterised in that** the slider (2) is designed as a one-piece plastics part.

9. Device according to at least one of the preceding claims, **characterised in that** a spindle nut (36) is moulded integral on the stop element (3) and engages with an adjusting spindle which is driven by a drive unit.
